# EUROPEAN PATENT APPLICATION

(11) **EP 1 202 243 A2**
(43) Date of publication of application: **02.05.2002**
(21) Application number: 01125537.9
(22) Date of filing: 25.10.2001
(51) Int. Cl.: G09G 3/34

(54) **Mobile telephone with adjustable display lighting**

(30) Priority: 26.10.2000 JP 2000326885
(71) Applicant: NEC CORPORATION, Tokyo (JP)
(72) Inventor: Miyashita, Tsutomu, Minato-ku, Tokyo (JP)
(74) Representative: Lippich, Wolfgang, Dipl.-Pys., Dr.rer.nat.

(57) **Abstract**

A mobile telephone including flat panel display such as a liquid crystal display unit (18) for displaying multimedia information, which is equipped with a lighting unit (20) such an LED (20), is capable of adjusting the light-on time period with reference to the contents of the multimedia information in order to reduce the power consumption by the lighting unit and increase the battery (21) lifetime.

## Description

The present invention relates to a mobile telephone and a method of controlling the operation of the mobile telephone as well as a program for controlling the operation of the mobile telephone, and more particularly to a mobile telephone capable of controlling a display light on time period and a method of controlling the display light on time period as well as a program for controlling the display light on time period.

The conventional mobile telephone has a back light for lighting on the display screen of the display unit thereof. The lighting on, of course, needs a power consumption. Usually, a battery is accommodated in the mobile telephone. In view of possible reduction to the power consumption, the conventional mobile telephone is usually adjusted to cause the back light to automatically light off after a predetermined time period has passed.

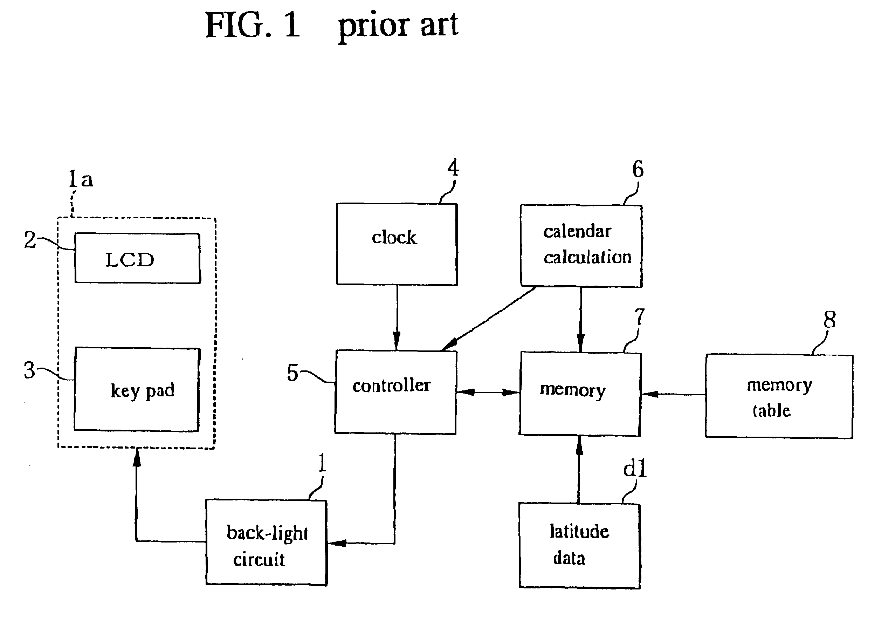

Japanese laid-open patent publication No. 8-338981 discloses the internal configuration of the conventional mobile telephone. FIG. 1 is a block diagram illustrative of an internal configuration of the conventional mobile telephone.

The mobile telephone has a liquid crystal display unit 2, a key pad unit 3, a back-light circuit unit 1, a control unit 5, a clock circuit unit 4, a calendar calculation unit 6, a memory 7 for storing a predetermined light-on time period, and a memory table 8 for storing informations about the light-on time periods. The back-light circuit unit 1 turns the back-light 1a into light-on for lighting the liquid crystal display unit 2 and the key pad unit 3. The back-light comprises a light emitting diode. The liquid crystal display unit 2 displays the information. The key pad unit 3 provides an interface to the user for enabling the user to enter any data and commands including latitude data 1d based on the used place. The clock circuit unit 4 generates current time data.

When the control unit 5 receives the entry of the command or the input of the data from the key pad unit 3 or receives the radio signal from the radio unit, the control unit 5 controls the back-light circuit unit 1 to allow the back-light 1a to light on during the predetermined time period.

The calendar calculation unit 6 outputs data of current date and month. The memory 7 stores a predetermined light-on time period calculated based on the data of current date and month and also based on the latitude data 1d.

The memory table 8 for storing informations about the light-on time periods which have been set from the sunset time and the sunrise time calculated from the latitude data 1d and the data of current date and month.

Upon pushing any key of the key pad unit 3 or receipt of the radio signal, the back-light 1a lights on during the light-on time period stored on the memory table 8 only when the current time is in a night time.

The light-on time period is preferably short for reducing the power consumption. It is, however, possible that the mobile telephone receives any multimedia information such as e-mails with or without attachment files. The possible necessary light-on time period for enabling the user to review the multimedia information may depend on the contents of the multimedia information. It is, therefore, desirable to adjust the light-on time period with reference to the contents of the multimedia information.

In the above circumstances, the development of a novel mobile telephone free from the above problems is desirable.

Accordingly, it is an object of the present invention to provide a novel mobile telephone free from the above problems.

It is a further object of the present invention to provide a novel mobile telephone capable of adjusting a light on time period for lighting on the display screen and if nay additionally the key input unit, depending on whcthcr the normal telephone function mode or the multimedia information display mode so as to ensure a sufficient long lighting on time period for reviewing the multimedia information, whilst allowing reducing the basic lighting on time period for telephone conversation or telephone communication for the purpose of reducing a power consumption of the mobile telephone.

It is a still further object of the present invention to provide a novel method of controlling a light on time period of a mobile telephone free from the above problems.

It is yet a further object of the present invention to provide a novel method of controlling a light on time period of a mobile telephone capable of adjusting a light on time period for lighting on the display screen and if nay additionally the key input unit, depending on whether the normal telephone function mode or the multimedia information display mode so as to ensure a sufficient long lighting on time period for reviewing the multimedia information, whilst allowing reducing the basic lighting on time period for telephone conversation or telephone communication for the purpose of reducing a power consumption of the mobile telephone.

It is a still further object of the present invention to provide a novel program for controlling a light on time period of a mobile telephone free from the above problems.

It is yet a further object of the prcscnt invention to provide a novel program for controlling a light on time period of a mobile telephone capable of adjusting a light on time period for lighting on the display screen and if nay additionally the key input unit, depending on whether the normal telephone function mode or the multimedia information display mode so as to ensure a sufficient long lighting on time period for reviewing the multimedia information, whilst allowing reducing the basic lighting on time period for telephone conversation or telephone communication for the purpose of reducing a power consumption of the mobile telephone.

The present invention provides a mobile telephone including : a display unit for displaying a multimedia information ; and a first function unit for lighting on a display unit, wherein said first function unit is adopted for varying a lighting on time period.

The present invention also provides a computer program for controlling a mobile telephone in implementing lighting on operation for displaying a multimedia information, said computer program comprising : setting plural different lighting on time periods for at least both displaying said multimedia information and performing said predetermined telephone function ; and controlling lighting on operation in accordance with said computer program.

The present invention also provides a method of controlling a mobile telephone in implementing lighting on operation for displaying a multimedia information, wherein a multimedia information is displayed with a modified lighting on operation for a different lighting on time period from a basic lighting on time period for performing a predetermined telephone function.

The above and other objects, features and advantages of the present invention will be apparent from the following descriptions.

Preferred embodiments according to the present invention will be described in detail with reference to the accompanying drawings.

FIG. 1 is a block diagram illustrative of an internal configuration of the conventional mobile telephone.

FIG. 2 is a block diagram illustrative of an internal configuration of a mobile telephone in a first embodiment in accordance with the present invention.

FIG. 3 is a flow chart illustrative of operations of displaying a multimedia information on the display screen of the display unit of the mobile telephone of FIG. 2.

A first aspect of the present invention is a mobile telephone including : a display unit for displaying a multimedia information ; and a first function unit for lighting on a display unit, wherein said first function unit is adopted for varying a lighting on time period.

The multimedia information may include any informations except for telephone voice signals. The kinds of said multimedia information may, for example, include an e-mail without any attached file, an e-mail with at least an attached file, a static image, and a dynamic irnagc, and combinations therewith. The lighting on time period in displaying said multimedia information may preferably longer than in performing a predetermined telephone function, so as to ensure a sufficient long modified lighting on time period for reviewing the multimedia information, whilst allowing reducing the basic lighting on time period for telephone conversation or telephone communication. The reduction of the basic lighting on time period for telephone conversation or telephone communication may reduce a power consumption of the device.

The above first function unit may optionally include : a lighting on unit for lighting on said display unit; and a control unit for controlling said lighting on unit in lighting on operation, and for varying said lighting on time period.

The above functions for controlling the plural different lighting on time periods may be realized by any available measures such as a software and a hardware. It is preferable that the above functions for controlling the plural different lighting on time periods may be realized by implementing one or more computer program. In this case, the control unit may further optionally include : a memory for storing a computer program for setting plural different lighting on time periods for at least both displaying said multimedia information and performing said predetermined telephone function ; and a processing unit for controlling lighting on operation in accordance with said computer program.

The computer program allows key input operations to set said plural different lighting on time periods, and change already-set plural different lighting on time periods. Namely, the device may have an interface to user, for example, a key input unit including key buttons, so that the user may operate the key buttons to set the plural different lighting on time periods respectively, and also change already-set plural different lighting on time periods in the users discretion. The novel device provides a large freedom of defining the lighting on time period in displaying the multimedia information in the users discretion. There is no particular limit how to define the lighting on time period in displaying the multimedia information. The issue of how to define the lighting on time period in displaying the multimedia information may depend on the computer program. The followings are examples of how to define the lighting on time period in displaying the multimedia information.

For example, the control unit may be adopted for setting a basic lighting on time period for performing said predetermined telephone function and at least a modified lighting on time period for displaying said multimedia information, and said at least a single modified lighting on time period is longer than said basic lighting on time period, so as to ensure a sufficient long modified lighting on time period for reviewing the multimedia information, whilst allowing reducing the basic lighting on time period for telephone conversation or telephone communication. The reduction of the basic lighting on time period for telephone conversation or telephone communication may reduce a power consumption of the device.

The control unit may be adopted for setting a single modified lighting on time period for displaying all of said multimedia information. Setting the single modified lighting on time period for displaying all of the multimedia informations simplifies the operations to set up the modified lighting on time period. In this case, there are two different lighting on time periods. First one is the basic lighting on time period for performing the normal telephone function. Second one is the single modified lighting on time period for displaying the multimedia informations, so as to ensure a sufficient long modified lighting on time period for reviewing the multimedia information, whilst allowing reducing the basic lighting on time period for telephone conversation or telephone communication. The reduction of the basic lighting on time period for telephone conversation or telephone communication may reduce a power consumption of the device.

Alternatively, the control unit may optionally be adopted for setting plural different modified lighting on time periods depending upon the number of characters of text included in said multimedia information. If the number of characters of text included in said multimedia information such as e-mail is variable, then the multimedia informations may be classified into plural groups in view of the number of characters of text included in said multimedia information, so that the plural different modified lighting on time periods are set for the plural groups classified in view of the number of characters of text included in said multimedia information. If the multimedia information falls into the group of the large number of the charactcrs, then the modified lighting on time period may be set long. If the multimedia information falls into the group of the small number of the characters, then the modified lighting on time period may be set short for reducing the basic lighting on time period for telephone conversation or telephone communication. The reduction of the basic lighting on time period for telephone conversation or telephone communication may reduce a power consumption of the device.

Further, alternatively, the control unit may optionally be adopted for setting plural different modified lighting on time periods depending upon kinds of said multimedia information. The kinds of said multimedia information may, for example, include an e-mail without any attached file, an e-mail with at least an attached file, a static image, and a dynamic image, and combinations therewith. For example, the lighting on time period for displaying the e-mail without any attached file may optionally be shorter than the e-mail with at least the attached file to reduce the basic lighting on time period for telephone conversation or telephone communication. The lighting on time period for displaying the e-mail without any attached file may optionally be shorter than the static or dynamic image file to reduce the basic lighting on time period for telephone conversation or telephone communication. The reduction of the basic lighting on time period for telephone conversation or telephone communication may reduce a power consumption of the device.

If the multimedia information includes an e-mail, then the control unit may optionally be adopted for setting plural different modified lighting on time periods depending upon the number of characters of said e-mail. If the number of characters of text included in said multimedia information such as e-mail is variable, then the multimedia informations may be classified into plural groups in view of the number of characters of text included in said multimedia information, so that the plural different modified lighting on time periods are set for the plural groups classified in view of the number of characters of text included in said multimedia information. If the multimedia information falls into the group of the large number of the characters, then the modified lighting on time period may be set long. If the multimedia information falls into the group of the small number of the characters, then the modified lighting on time period may be set short for reducing the basic lighting on time period for telephone conversation or telephone communication. The reduction of the basic lighting on time period for telephone conversation or telephone communication may reduce a power consumption of the device.

If the multimedia information includes an e-mail, then the control unit may optionally be adopted for setting plural different modified lighting on time periods depending upon at least a group of registered sender's e-mail addresses and a remaining group of non-registered sender's e-mail addresses. The important sender's e-mail addresses may be registcred.

If the multimedia information includes an e-mail, then the control unit may optionally be adopted for setting plural different modified lighting on time periods depending upon respective one of registered sender's e-mail addresses separately and a remaining group of non-registered sender's e-mail addresses.

If the multimedia information includes an e-mail, then the control unit may optionally be adopted for setting plural different modified lighting on time periods depending upon at least a priority level of said e-mail.

If the multimedia information includes an e-mail, then the control unit may optionally be adopted for setting plural different modified lighting on time periods depending upon a combination of at least two selected from the group consisting of : the number of characters of text included in said multimedia information ; kinds of said multimedia information ; the number of characters of an e-mail ; at least a group of registered sender's e-mail addresses and a remaining group of non-registered sender's e-mail addresses ; respective one of registered sender's e-mail addresses separately and a remaining group of non-registered sender's e-mail addresses ; and at least a priority level of said e-mail.

The lighting on unit may optionally comprise a light emitting device and a light emitting device control unit electrically coupled to said light emitting device for controlling said light emitting device in light emission operation.

The display unit may optionally comprise a display device and a display control unit electrically coupled to said display device for controlling said display device in displaying operation.

The first function unit may furthermore include ; a timer electrically coupled to said control unit for performing a time-count during lighting on operation and enabling said control unit to control said lighting on time period.

A second aspect of the present invention is a mobile telephone including : a display unit for displaying a multimedia information ; a lighting on unit for lighting on said display unit; and a control unit for controlling said lighting on unit in lighting on operation, and for varying said lighting on time period, wherein said control unit further includes : a first function block for setting plural different lighting on time periods for at least both displaying said multimedia information and performing said predetermined telephone function ; and a second function block for controlling lighting on operation in accordance with said computer program.

It is possible that the lighting on time period in displaying said multimedia information is longer than in performing a predetermined telephone function.

It is possible that the first function block allows key input operations to set said plural different lighting on time periods, and change already-set plural different lighting on time periods.

It is possible that the first function block is adopted for setting a basic lighting on time period for performing said predetermined telephone function and at least a modified lighting on time period for displaying said multimedia information, and said at least a single modified lighting on time period is longer than said basic lighting on time period.

The first function block may set a single modified lighting on time period for displaying all of said multimedia information.

The first function block may set plural different modified lighting on time periods depending upon the number of characters of text included in said multimedia information.

The first function block may set plural different modified lighting on time periods depending upon kinds of said multimedia information.

The kinds of said multimedia information may include an e-mail without any attached file, an e-mail with at least an attached file, a static image, and a dynamic image, and combinations therewith.

The multimedia information may include an e-mail, and said first function block sets plural different modified lighting on time periods depending upon the number of characters of said e-mail.

The multimedia information may include an e-mail, and said first function block sets plural different modified lighting on time periods depending upon at least a group of registered sender's e-mail addresses and a remaining group of non-registered sender's e-mail addresses.

The multimedia information may include an e-mail, and said first function block sets plural different modified lighting on time periods depending upon respective one of registered sender's e-mail addresses separately and a remaining group of non-registered sender's e-mail addresses.

The multimedia information may include an e-mail, and said first function block sets plural different modified lighting on time periods depending upon at least a priority level of said e-mail.

The first function block may set plural different modified lighting on time periods depending upon a combination of at least two selected from the group consisting of : the number of characters of text included in said multimedia information ; kinds of said multimedia information ; the number of characters of an e-mail ; at least a group of registered sender's e-mail addresses and a remaining group of non-registered sender's e-mail addresses ; respective one of registered sender's e-mail addresses separately and a remaining group of non-registered sender's e-mail addresses ; and at least a priority level of said c-mail.

A third aspect of the present invention is a computer program for controlling a mobile telephone in implementing lighting on operation for displaying a multimedia information, said computer program comprising : setting plural different lighting on time periods for at least both displaying said multimedia information and performing said predetermined telephone function ; and controlling lighting on operation in accordance with said computer program.

It is preferable that the lighting on time period in displaying said multimedia information is longer than in performing a predetermined telephone function.

The computer program may allow key input operations to set said plural different lighting on time periods, and change already-set plural different lighting on time periods.

The computer program may set a basic lighting on time period for performing said predetermined telephone function and at least a modified lighting on time period for displaying said multimedia information, and said at least a single modified lighting on time period is longer than said basic lighting on time period.

The computer program may set a single modified lighting on time period for displaying all of said multimedia information.

The computer program may set plural different modified lighting on time periods depending upon the number of characters of text included in said multimedia information.

The computer program may set plural different modified lighting on time periods depending upon kinds of said multimedia information.

The kinds of said multimedia information may include an e-mail without any attached file, an e-mail with at least an attached file, a static image, and a dynamic image, and combinations therewith.

The multimedia information may include an e-mail, and said computer program sets plural different modified lighting on time periods depending upon the number of characters of said e-mail.

The multimedia information may include an e-mail, and said computer program sets plural different modified lighting on time periods depending upon at least a group of registered sender's e-mail addresses and a remaining group of non-registered sender's e-mail addresses.

The multimedia information may include an e-mail, and said computer program sets plural different modified lighting on time periods depending upon respective one of registered sender's e-mail addresses separately and a remaining group of non-registered sender's e-mail addresses.

The multimedia information may include an e-mail, and said computer program sets plural different modified lighting on time periods depending upon at least a priority level of said e-mail.

The computer program may set plural different modified lighting on time periods depending upon a combination of at least two selected from the group consisting of : the number of characters of text included in said multimedia information : kinds of said multimedia information ; the number of characters of an e-mail; at least a group of registered sender's e-mail addresses and a remaining group of non-registered sender's e-mail addresses ; respective one of registered sender's e-mail addresses separately and a remaining group of non-registered sender's e-mail addresses ; and at least a priority level of said e-mail.

A fourth aspect of the present invention is a method of controlling a mobile telephone in implementing lighting on operation for displaying a multimedia information, wherein a multimedia information is displayed with a modified lighting on operation for a different lighting on time period from a basic lighting on time period for performing a predetermined telephone function.

It is possible that at least a modified lighting on time period in displaying said multimedia information may be longer than in performing a predetermined telephone function.

Key input operations may be allowed to set said basic and at least modified different lighting on time periods, and change already-set basic and at least modified different lighting on time periods.

The computer program may set a basic lighting on time period for performing said predetermined telephone function and at least a modified lighting on time period for displaying said multimedia information, and said at least single modified lighting on time period is longer than said basic lighting on time period.

A single modified lighting on time period may be set for displaying all of said multimedia information.

The plural different modified lighting on time periods may be set depending upon the number of characters of text included in said multimedia information.

The plural different modified lighting on time periods may be set depending upon kinds of said multimedia information.

The kinds of said multimedia information may include an e-mail without any attached file, an e-mail with at least an attached file, a static image, and a dynamic image, and combinations therewith.

The multimedia information may include an e-mail, and plural different modified lighting on time periods are set depending upon the number of characters of said e-mail.

The multimedia information may include an e-mail, and plural different modified lighting on time periods are set depending upon at least a group of registered sender's e-mail addresses and a remaining group of non-registered sender's e-mail addresses.

The multimedia information may include an e-mail, and plural different modified lighting on time periods are set depending upon respective one of registered sender's e-mail addresses separately and a remaining group of non-registered sender's e-mail addresses.

The multimedia information may include an e-mail, and plural different modified lighting on time periods are set depending upon at least a priority level of said e-mail.

The plural different modified lighting on time periods may be set depending upon a combination of at least two selected from the group consisting of: the number of characters of text included in said multimedia information ; kinds of said multimedia information ; the number of characters of an e-mail ; at least a group of registered sender's e-mail addresses and a remaining group of non-registered sender's e-mail addresses ; respective one of registered sender's e-mail addresses separately and a remaining group of non-registered sender's c-mail addresses ; and at least a priority level of said e-mail.

### FIRST EMBODIMENT :

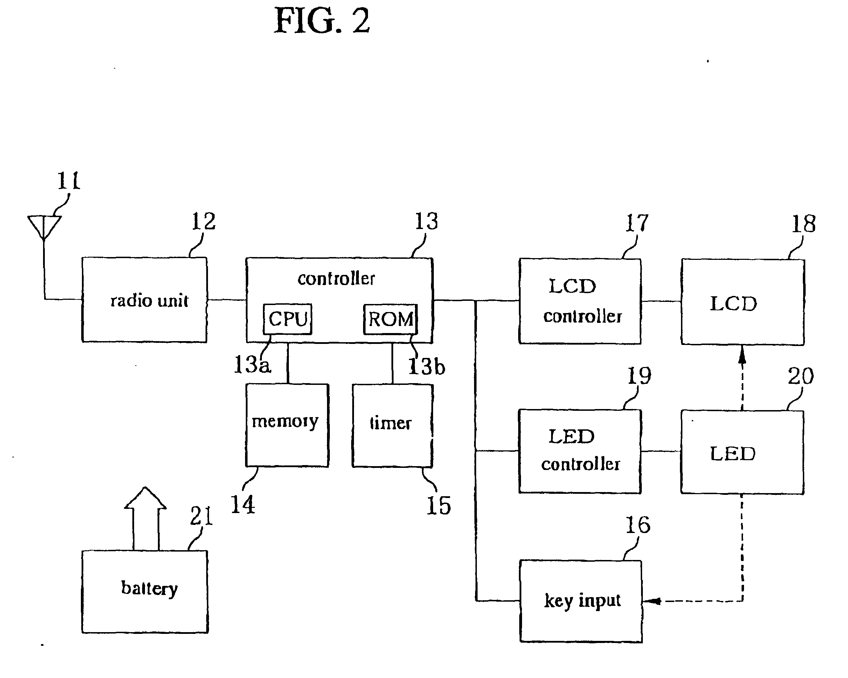

A first embodiment according to the present invention will be described in detail with reference to the drawings. FIG. 2 is a block diagram illustrative of an internal configuration of a mobile telephone in a first embodiment in accordance with the present invention. The mobile telephone has an antenna 11 for receiving and transmitting radio wave. A radio unit 12 is electrically connected to the antenna 11. A control unit 13 is also provided which is electrically connected to the radio unit 12. The control unit 13 also includes a CPU 13a and a ROM 13b. A memory 14 is also provided which is electrically connected to the control unit 13. A timer 15 is also provided which is electrically connected to the control unit 13.

A key input unit 16 is also provided which is electrically connected to the control unit 13 for allowing inputs of any data and commands. A liquid crystal display unit 18 is provided for displaying an information. The liquid crystal display unit 18 includes a display screen. A liquid crystal display control unit 17 is also provided which is electrically connected to the control unit 13 and also electrically connected to the liquid crystal display unit 18 for controlling the liquid crystal display unit 18 in the display operation in accordance with the user's operation to the key input unit 16.

A light emitting diode 20 is provided as a back-light for lighting on the display screen of the liquid crystal display unit 18 and also the key input unit 16. A light emitting diode control unit 19 is also provided which is electrically connected to the control unit 13 and also electrically connected to the light emitting diode 20 in operation of lighting on the display screen of the liquid crystal display unit 18 and also the key input unit 16. The mobile telephone is operable by a power supplied from a battery 21. Namely, the battery 21 may supply a power to the radio unit 12, the control unit 13, the memory 14, the timer 15, the key input unit 16, the display control unit 17, the display unit 18, the light emitting diode 19 and the light emitting diode unit 20.

The above radio unit 12 processes the radio signals for transmitting and receiving radio waves under the control by the control unit 13. The above respective units are controlled by the CPU 13a of the control unit 13. The ROM 13b stores a program to be implemented for allowing the CPU 13a to perform the operations.

If the radio signal concerning with e-mail is received by the radio unit 12, then the control unit 13 enters into an e-mail display mode upon receipt of commands entered from the key input unit 16, wherein the e-mail is displayed on the display screen of the display unit 18. Based on the control by the timer 15, the light emitting diode 20 lights up the display unit 18 and the key input unit 16 for a longer time period than a telephone-function mode.

The time period of lighting on the display unit 18 and the key input unit 16 may optically be determined in accordance with any available standard.

The memory 14 is provided for storing the multimedia informations including e-mails as received. The timer 15 is provided for counting a time of the lighting on.

The followings are examples of how to define the lighting on time period in displaying the multimedia information. For example, the control unit 13 may be adopted for setting a basic lighting on time period for performing said predetermined telephone function and a modified lighting on time period for displaying the multimedia information, and the a single modified lighting on time period is longer than the basic lighting on time period, so as to ensure a sufficient long modified lighting on time period for reviewing the multimedia information, whilst allowing reducing the basic lighting on time period for telephone conversation or telephone communication. The reduction of the basic lighting on time period for telephone conversation or telephone communication may reduce a power consumption of the device.

Also, the control unit 13 may be adopted for setting a single modified lighting on time period for displaying all of the multimedia information. Setting the single modified lighting on time period for displaying all of the multimedia informations simplifies the operations to set up the modified lighting on time period. In this case, there are two different lighting on time periods. First one is the basic lighting on time period for performing the normal telephone function. Second one is the single modified lighting on time period for displaying the multimedia informations, so as to ensure a sufficient long modified lighting on time period for reviewing the multimedia information, whilst allowing reducing the basic lighting on time period for telephone conversation or telephone communication. The reduction of the basic lighting on time period for telephone conversation or telephone communication may reduce a power consumption of the device.

Alternatively, the control unit 13 may optionally be adopted for setting plural different modified lighting on time periods depending upon the number of characters of text included in said multimedia information. If the number of characters of text included in said multimedia information such as e-mail is variable, then the multimedia informations may be classified into plural groups in view of the number of characters of text included in said multimedia information, so that the plural different modified lighting on time periods are set for the plural groups classified in view of the number of characters of text included in said multimedia information. If the multimedia information falls into the group of the large number of the characters, then the modified lighting on time period may be set long. If the multimedia information falls into the group of the small number of the characters, then the modified lighting on time period may be set short for reducing the basic lighting on time period for telephone conversation or telephone communication. The reduction of the basic lighting on time period for telephone conversation or telephone communication may reduce a power consumption of the device.

Further, alternatively, the control unit 13 may optionally be adopted for setting plural different modified lighting on time periods depending upon kinds of said multimedia information. The kinds of said multimedia information may, for example, include an e-mail without any attached file, an e-mail with at least an attached file, a static image, and a dynamic image, and combinations therewith. For example, the lighting on time period for displaying the e-mail without any attached file may optionally be shorter than the e-mail with at least the attached file to reduce the basic lighting on time period for telephone conversation or telephone communication. The lighting on time period for displaying the e-mail without any attached file may optionally be shorter than the static or dynamic image file to reduce the basic lighting on time period for telephone conversation or telephone communication. The reduction of the basic lighting on time period for telephone conversation or telephone communication may reduce a power consumption of the device.

If the multimedia information includes an e-mail, then the control unit 13 may optionally be adopted for setting plural different modified lighting on time periods depending upon the number of characters of said e-mail. If the number of characters of text included in said multimedia information such as e-mail is variable, then the multimedia informations may be classified into plural groups in view of the number of characters of text included in said multimedia information, so that the plural different modified lighting on time periods are set for the plural groups classified in view of the number of characters of text included in said multimedia information. If the multimedia information falls into the group of the large number of the characters, then the modified lighting on time period may be set long. If the multimedia information falls into the group of the small number of the characters, then the modified lighting on time period may be set short for reducing the basic lighting on time period for telephone conversation or telephone communication. The reduction of the basic lighting on time period for telephone conversation or telephone communication may reduce a power consumption of the device.

If the multimedia information includes an e-mail, then the control unit 13 may optionally be adopted for setting plural different modified lighting on time periods depending upon at least a group of registered sender's e-mail addresses and a remaining group of non-registered sender's e-mail addresses. The important sender's e-mail addresses may be registered.

If the multimedia information includes an e-mail, then the control unit 13 may optionally be adopted for setting plural different modified lighting on time periods depending upon respective one of registered sender's e-mail addresses separately and a remaining group of non-registered sender's e-mail addresses.

If the multimedia information includes an e-mail, then the control unit 13 may optionally be adopted for setting plural different modified lighting on time periods depending upon at least a priority level of said e-mail.

If the multimedia information includes an e-mail, then the control unit 13 may optionally be adopted for setting plural different modified lighting on time periods depending upon a combination of at least two selected from the group consisting of : the number of characters of text included in said multimedia information ; kinds of said multimedia information ; the number of characters of an e-mail; at least a group of registered sender's e-mail addresses and a remaining group of non-registered sender's e-mail addresses ; respective one of registered sender's e-mail addresses separately and a remaining group of non-registered sender's e-mail addresses ; and at least a priority level of said e-mail.

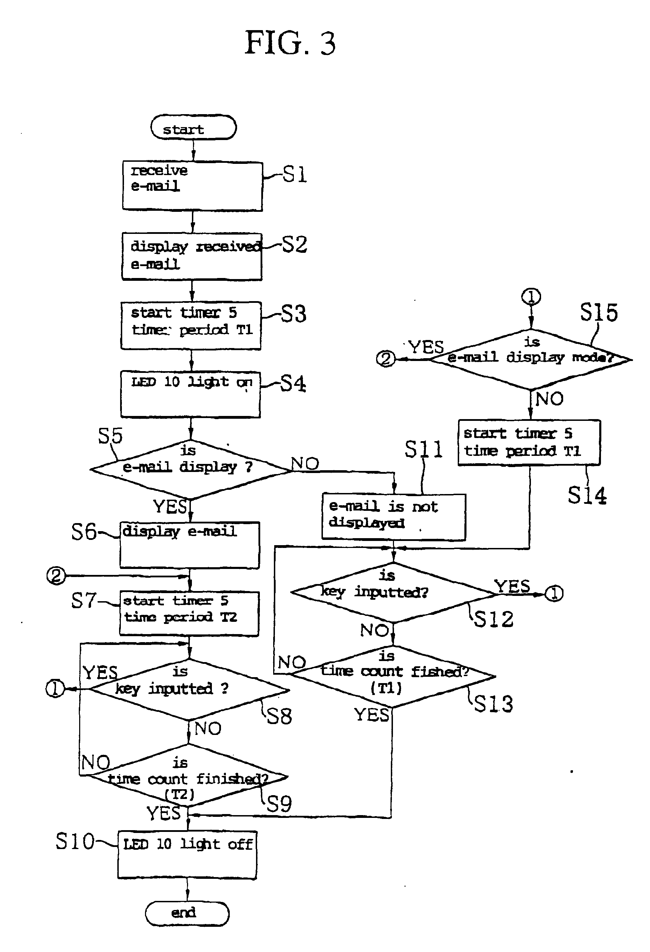

The following descriptions will focus on the operations of the above mobile telephone. FIG. 3 is a flow chart illustrative of operations of displaying a multimedia information on the display screen of the display unit of the mobile telephone of FIG. 2.

In a step S1, a radio signal is received by the radio unit 12 and then the control unit 13 verifies that the radio signal is concerned with the e-mail.

In a step S2, a notice of receipt of the e-mail is displayed on the display screen of the display unit 18.

In a step S3, after a basic lighting on time period T1 is set, then the timer 15 starts time-count operation based on the basic lighting on time period T1.

In a step S4, the light emitting diode 20 lights ON under the control by the light emitting diode control unit 19.

In a step S5, the user operates the key input unit 16 to enter the command to the effect that the received e-mail be displayed on the display unit 18.

If the control unit 13 enters into the e-mail display mode, then in a step S6, the c-mail is displayed on the display screen of the display unit 18.

In a step S7, after a modified lighting on time period T2 is set which is longer than the basic lighting on time period T1, then the timer 15 starts time-count operation based on the modified lighting on time period T2. The basic and modified lighting on time periods T1 and T2 are as described above.

In a step S8, it is verified whether any further key input or entry appears.

If no further key input or entry appears, then in a step S9, it is verified whether the modified lighting on time period T2 has passed.

If the modified lighting on time period T2 has passed, then in a step S10, the light emitting diode 20 lights OFF.

Referring back to the step S9, if the modified lighting on time period T2 has not yet passed, the operation is back to the step S8, wherein it is verified whether any further key input or entry appears.

In the step S8, if any further key input or entry appears, then in a step S15, it is verified that the entered command is to enter into the e-mail display mode for displaying another received e-mail.

If the entered command is to display the other e-mail, then in the step S7, the modified lighting on time period T2 is again set which is longer than the basic lighting on time period T1, then the timer 15 starts again time-count operation based on the modified lighting on time period T2. Then, in the step S8, it is verified whether any further key input or entry appears.

With reference again to the step S15, if the entered command is not to enter into the e-mail display mode and is to enter, for example, the normal telephone function mode, in a step S14, the basic lighting on time period T1 is again set, and the timer 15 again starts time-count operation based on the basic lighting on time period T1.

In a step S12, it is verified whether any further key input or entry appears.

if no further key input or entry appears, then in a step S13, it is verified whether the basic lighting on time period T1 has passed.

If the basic lighting on time period T1 has passed, then in the step S10, the light emitting diode 20 lights OFF.

Referring back to the step S13, if the basic lighting on time period T1 has not yet passed, the operation is back to the step S12, wherein it is verified whether any further key input or entry appears.

In the step S12, if any further key input or entry appears, then in the step S15, it is again verified that the entered command is to enter into the e-mail display mode for displaying another received e-mail.

With reference again to the step S5, if the control unit 13 does not enter into the e-mail display mode, then in a step S11, the e-mail is not displayed on the display screen of the display unit 18.

In the step S12, it is verified whether any further key input or entry appears.

If no further key input or entry appears, then in the step S13, it is verified whether the basic lighting on time period T1 has passed.

If the basic lighting on time period T1 has passed, then in the step S10, the light emitting diode 20 lights OFF.

Referring back to the step S13, if the basic lighting on time period T1 has not yet passed, the operation is back to the step S12, wherein it is verified whether any further key input or entry appears.

In the step S12, if any further key input or entry appears, then in the step S15, it is again verified that the entered command is to enter into the e-mail display mode for displaying another received e-mail.

As described above, if the control unit 13 enters into the multimedia display mode such as the e-mail display mode, then the modified lighting on time period T2 is newly set, which is longer than the basic lighting on time period T1, so as to ensure a sufficient long lighting on time period for reviewing the multimedia information, whilst allowing reducing the basic lighting on time period for telephone conversation or telephone communication. The reduction of the basic lighting on time period for telephone conversation or telephone communication may reduce a power consumption of the device.

It is, however, optionally possible that the user's instruction compulsory inhibits the light on of the light emitting diode 20.

It is also possible that an appropriate value of the modified time period T2 may be decided statistically with reference to the past timers necessary for having completed the reviews of the past many multimedia informations.

Although the invention has been described above in connection with several preferred embodiments therefor, it will be appreciated that those embodiments have been provided solely for illustrating the invention, and not in a limiting sense. Numerous modifications and substitutions of equivalent materials and techniques will be readily apparent to those skilled in the art after reading the present application, and all such modifications and substitutions are expressly understood to fall within the true scope and spirit of the appended claims.

## Claims

1. A mobile telephone including:
a display unit for displaying a multimedia information; and
a first function unit for lighting on a display unit,
wherein said first function unit is adopted for varying a lighting on time period.

2. The mobile telephone as claimed in claim 1, wherein said lighting on time period in displaying said multimedia information is longer than in performing a predetermined telephone function.

3. The mobile telephone as claimed in claim 1 or 2, wherein said first function unit further includes:
a lighting on unit for lighting on said display unit; and
a control unit for controlling said lighting on unit in lighting on operation, and for varying said lighting on time period.

4. The mobile telephone as claimed in claim 3, wherein said control unit further includes:
a memory for storing a computer program for setting plural different lighting on time periods for at least both displaying said multimedia information and performing said predetermined telephone function; and
a processing unit for controlling lighting on operation in accordance with said computer program.

5. The mobile telephone as claimed in claim 4, wherein said computer program allows key input operations to set said plural different lighting on time periods, and change already-set plural different lighting on time periods.

6. The mobile telephone as claimed in anyone of claims 3 to 5, wherein said control unit is adopted for setting a basic lighting on time period for performing said predetermined telephone function and at least a modified lighting on time period for displaying said multimedia information, and said at least a single modified lighting on time period is longer than said basic lighting on time period.

7. The mobile telephone as claimed in anyone of claims 3 to 6, wherein said control unit is adopted for setting a single modified lighting on time period for displaying all of said multimedia information.

8. The mobile telephone as claimed in anyone of claims 3 to 6, wherein said control unit is adopted for setting plural different modified lighting on time periods depending upon the number of characters of text included in said multimedia information.

9. The mobile telephone as claimed in anyone of claims 3 to 6, wherein said control unit is adopted for setting plural different modified lighting on time periods depending upon kinds of said multimedia information.

10. The mobile telephone as claimed in claim 9, wherein said kinds of said multimedia information include an e-mail without any attached file, an e-mail with at least an attached file, a static image, and a dynamic image, and combinations therewith.

11. The mobile telephone as claimed in anyone of claims 3 to 10, wherein said multimedia information includes an e-mail, and said control unit is adopted for setting plural different modified lighting on time periods depending upon the number of characters of said e-mail.

12. The mobile telephone as claimed in anyone of claims 3 to 10, wherein said multimedia information includes an e-mail, and said control unit is adopted for setting plural different modified lighting on time periods depending upon at least a group of registered sender's e-mail addresses and a remaining group of non-registered sender's e-mail addresses.

13. The mobile telephone as claimed in anyone of claims 3 to 10, wherein said multimedia information includes an e-mail, and said control unit is adopted for setting plural different modified lighting on time periods depending upon respective one of registered sender's e-mail addresses separately and a remaining group of non-registered sender's e-mail addresses.

14. The mobile telephone as claimed in anyone of claims 3 to 10, wherein said multimedia information includes an e-mail, and said control unit is adopted for setting plural different modified lighting on time periods depending upon at least a priority level of said e-mail.

15. The mobile telephone as claimed in anyone of claims 3 to 14, wherein said control unit is adopted for setting plural different modified lighting on time periods depending upon a combination of at least two selected from the group consisting of: the number of characters of text included in said multimedia information; kinds of said multimedia information; the number of characters of an e-mail; at least a group of registered sender's e-mail addresses and a remaining group of non-registered sender's e-mail addresses; respective one of registered sender's e-mail addresses separately and a remaining group of non-registered sender's e-mail addresses; and at least a priority level of said e-mail.

16. The mobile telephone as claimed in anyone of claims 3 to 15, wherein said lighting on unit further comprises a light emitting device and a light emitting device control unit electrically coupled to said light emitting device for controlling said light emitting device in light emission operation.

17. The mobile telephone as claimed in anyone of claims 1 to 16, wherein said display unit comprises a display device and a display control unit electrically coupled to said display device for controlling said display device in displaying operation.

18. The mobile telephone as claimed in anyone of claims 1 to 17, wherein said first function unit furthermore includes: a timer electrically coupled to said control unit for performing a time-count during lighting on operation and enabling said control unit to control said lighting on time period.

19. A mobile telephone including:
a display unit for displaying a multimedia information;
a lighting on unit for lighting on said display unit; and
a control unit for controlling said lighting on unit in lighting on operation, and for varying said lighting on time period,
wherein said control unit further includes:
a first function block for setting plural different lighting on time periods for at least both displaying said multimedia information and performing said predetermined telephone function; and
a second function block for controlling lighting on operation in accordance with said computer program.

20. The mobile telephone as claimed in claim 19, wherein said lighting on time period in displaying said multimedia information is longer than in performing a predetermined telephone function.

21. The mobile telephone as claimed in claim 19 or 20, wherein said first function block allows key input operations to set said plural different lighting on time periods, and change already-set plural different lighting on time periods.

22. The mobile telephone as claimed in anyone of claims 19 to 21, wherein said first function block is adopted for setting a basic lighting on time period for performing said predetermined telephone function and at least a modified lighting on time period for displaying said multimedia information, and said at least a single modified lighting on time period is longer than said basic lighting on time period.

23. The mobile telephone as claimed in anyone of claims 19 to 22, wherein said first function block sets a single modified lighting on time period for displaying all of said multimedia information.

24. The mobile telephone as claimed in anyone of claims 19 to 22, wherein said first function block sets plural different modified lighting on time periods depending upon the number of characters of text included in said multimedia information.

25. The mobile telephone as claimed in anyone of claims 19 to 22, wherein said first function block sets plural different modified lighting on time periods depending upon kinds of said multimedia information.

26. The mobile telephone as claimed in claim 25, wherein said kinds of said multimedia information include an e-mail without any attached file, an e-mail with at least an attached file, a static image, and a dynamic image, and combinations therewith.

27. The mobile telephone as claimed in anyone of claims 19 to 26, wherein said multimedia information includes an e-mail, and said first function block sets plural different modified lighting on time periods depending upon the number of characters of said e-mail.

28. The mobile telephone as claimed in anyone of claims 19 to 26, wherein said multimedia information includes an e-mail, and said first function block sets plural different modified lighting on time periods depending upon at least a group of registered sender's e-mail addresses and a remaining group of non-registered sender's e-mail addresses.

29. The mobile telephone as claimed in anyone of claims 19 to 26, wherein said multimedia information includes an e-mail, and said first function block sets plural different modified lighting on time periods depending upon respective one of registered sender's e-mail addresses separately and a remaining group of non-registered sender's e-mail addresses.

30. The mobile telephone as claimed in anyone of claims 19 to 26, wherein said multimedia information includes an e-mail, and said first function block sets plural different modified lighting on time periods depending upon at least a priority level of said e-mail.

31. The mobile telephone as claimed in anyone of claims 19 to 30, wherein said first function block sets plural different modified lighting on time periods depending upon a combination of at least two selected from the group consisting of: the number of characters of text included in said multimedia information; kinds of said multimedia information; the number of characters of an e-mail; at least a group of registered sender's e-mail addresses and a remaining group of non-registered sender's e-mail addresses; respective one of registered sender's e-mail addresses separately and a remaining group of non-registered sender's e-mail addresses; and at least a priority level of said e-mail.

32. A computer program for controlling a mobile telephone in implementing lighting on operation for displaying a multimedia information, said computer program comprising:
setting plural different lighting on time periods for at least both displaying said multimedia information and performing said predetermined telephone function; and
controlling lighting on operation in accordance with said computer program.

33. The computer program as claimed in claim 32, wherein said lighting on time period in displaying said multimedia information is longer than in performing a predetermined telephone function.

34. The computer program as claimed in claim 32 or 33, wherein said computer program allows key input operations to set said plural different lighting on time periods, and change already-set plural different lighting on time periods.

35. The computer program as claimed in anyone of claims 32 to 34, wherein said computer program sets a basic lighting on time period for performing said predetermined telephone function and at least a modified lighting on time period for displaying said multimedia information, and said at least a single modified lighting on time period is longer than said basic lighting on time period.

36. The computer program as claimed in anyone of claims 32 to 35, wherein said computer program sets a single modified lighting on time period for displaying all of said multimedia information.

37. The computer program as claimed in anyone of claims 32 to 35, wherein said computer program sets plural different modified lighting on time periods depending upon the number of characters of text included in said multimedia information.

38. The computer program as claimed in anyone of claims 32 to 35, wherein said computer program sets plural different modified lighting on time periods depending upon kinds of said multimedia information.

39. The computer program as claimed in claim 38, wherein said kinds of said multimedia information include an e-mail without any attached file, an e-mail with at least an attached file, a static image, and a dynamic image, and combinations therewith.

40. The computer program as claimed in anyone of claims 32 to 39, wherein said multimedia information includes an e-mail, and said computer program sets plural different modified lighting on time periods depending upon the number of characters of said e-mail.

41. The computer program as claimed in anyone of claims 32 to 40, wherein said multimedia information includes an e-mail, and said computer program sets plural different modified lighting on time periods depending upon at least a group of registered sender's e-mail addresses and a remaining group of non-registered sender's e-mail addresses.

42. The computer program as claimed in anyone of claims 32 to 40, wherein said multimedia information includes an e-mail, and said computer program sets plural different modified lighting on time periods depending upon respective one of registered sender's e-mail addresses separately and a remaining group of non-registered sender's e-mail addresses.

43. The computer program as claimed in anyone of claims 32 to 40, wherein said multimedia information includes an e-mail, and said computer program sets plural different modified lighting on time periods depending upon at least a priority level of said e-mail.

44. The computer program as claimed in anyone of claims 32 to 43, wherein said computer program sets plural different modified lighting on time periods depending upon a combination of at least two selected from the group consisting of: the number of characters of text included in said multimedia information; kinds of said multimedia information; the number of characters of an e-mail; at least a group of registered sender's e-mail addresses and a remaining group of non-registered sender's e-mail addresses; respective one of registered sender's e-mail addresses separately and a remaining group of non-registered sender's e-mail addresses; and at least a priority level of said e-mail.

45. A method of controlling a mobile telephone in implementing lighting on operation for displaying a multimedia information,
wherein a multimedia information is displayed with a modified lighting on operation for a different lighting on time period from a basic lighting on time period for performing a predetermined telephone function.

46. The method as claimed in claim 45, wherein said at least a modified lighting on time period is displaying said multimedia information is longer than in performing a predetermined telephone function.

47. The method as claimed in claim 45 or 46, wherein key input operations are allowed to set said basic and at least modified different lighting on time periods, and change already-set basic and at least modified different lighting on time periods.

48. The method as claimed in anyone of claims 45 to 47, wherein said computer program sets a basic lighting on time period for performing said predetermined telephone function and at least a modified lighting on time period for displaying said multimedia information, and said at least single modified lighting on time period is longer than said basic lighting on time period.

49. The method as claimed in anyone of claims 45 to 48, wherein a single modified lighting on time period is set for displaying all of said multimedia information.

50. The method as claimed in anyone of claims 45 to 48, wherein plural different modified lighting on time periods are set depending upon the number of characters of text included in said multimedia information.

51. The method as claimed in anyone of claims 45 to 48, wherein plural different modified lighting on time periods are set depending upon kinds of said multimedia information.

52. The method as claimed in claim 51, wherein said kinds of said multimedia information include an e-mail without any attached file, an e-mail with at least an attached file, a static image, and a dynamic image, and combinations therewith.

53. The method as claimed in anyone of claims 45 to 52, wherein said multimedia information includes an e-mail, and plural different modified lighting on time periods are set depending upon the number of characters of said e-mail.

54. The method as claimed in anyone of claims 45 to 52, wherein said multimedia information includes an e-mail, and plural different modified lighting on time periods are set depending upon at least a group of registered sender's e-mail addresses and a remaining group of non-registered sender's e-mail addresses.

55. The method as claimed in anyone of claims 45 to 52, wherein said multimedia information includes an e-mail, and plural different modified lighting on time periods are set depending upon respective one of registered sender's e-mail addresses separately and a remaining group of non-registered sender's e-mail addresses.

56. The method as claimed in anyone of claims 45 to 52, wherein said multimedia information includes an e-mail, and plural different modified lighting on time periods are set depending upon at least a priority level of said e-mail.

57. The method as claimed in anyone of claims 45 to 56, wherein plural different modified lighting on time periods are set depending upon a combination of at least two selected from the group consisting of: the number of characters of text included in said multimedia information; kinds of said multimedia information; the number of characters of an e-mail; at least a group of registered sender's e-mail addresses and a remaining group of non-registered sender's e-mail addresses; respective one of registered sender's e-mail addresses separately and a remaining group of non-registered sender's e-mail addresses; and at least a priority level of said e-mail.
